# EUROPÄISCHE PATENTSCHRIFT

(11) **EP 2 660 436 B1**
(45) Veröffentlichungstag und Bekanntmachung des Hinweises auf die Patenterteilung: **15.06.2016**
(21) Anmeldenummer: 12290150.7
(22) Anmeldetag: 03.05.2012
(51) Int. Cl.: F01N 3/24, F01N 9/00

(54) **Verfahren zum Entlüften einer Fördereinheit für ein flüssiges Additiv**
Method for deaerating a liquid additive supply unit
Procédé de purge d'air d'une unité d'alimentation d'un additif liquide

(43) Veröffentlichungstag der Anmeldung: 06.11.2013
(73) Patentinhaber: Continental Automotive GmbH, 30165 Hannover (DE)
(72) Erfinder: Truong, Anthony, 5700 Metz (FR); Kornatz, Yan, 57645 Retonfey (FR); Janiaut, Michael, 57730 Folschviller (FR)

(56) Entgegenhaltungen:
- EP-B1- 1 222 370
- DE-A1-102009 056 181

## Beschreibung

Die Erfindung betrifft ein Verfahren zum Entlüften einer Fördereinheit, für ein flüssiges Additiv. Fördereinheiten für ein flüssiges Additiv werden beispielsweise im Kraftfahrzeugbereich eingesetzt, um ein flüssiges Additiv in eine Abgasbehandlungsvorrichtung zur Reinigung der Abgase einer Verbrennungskraftmaschine zu dosieren.

In Abgasbehandlungsvorrichtungen von Kraftfahrzeugen wird häufig das Verfahren der selektiven katalytischen Reduktion (SCR-Verfahren, SCR = Selective Catalytic Reduction) durchgeführt, bei welchem Stickstoffoxidverbindungen im Abgas der Verbrennungskraftmaschine unter Zuhilfenahme eines Reduktionsmittels reduziert werden. Dieses Reduktionsmittel kann als flüssiges Additiv zugeführt werden. Als Reduktionsmittel bzw. als flüssiges Additiv wird dann bevorzugt eine Harnstoff-Wasser-Lösung verwendet. Harnstoff-Wasser-Lösung ist zu diesem Zweck mit einem Harnstoffgehalt von 32,5 % beispielsweise unter dem Handelsnamen AdBlue^{®} erhältlich.

Eine Fördereinheit für ein flüssiges Additiv entnimmt das flüssige Additiv typischerweise aus einem Tank, in welchem das flüssige Additiv gespeichert ist. Die Fördereinheit weist typischerweise eine Förderleitung auf, die sich von einer Ansaugstelle an einem Tank zu einer Einspritzvorrichtung (an einer Abgasleitung) erstreckt, an der das flüssige Additiv abgegeben wird. Die Förderleitung ist im Betrieb zumeist mit dem flüssigem Additiv gefüllt. Es kann passieren, dass Luft in der Fördereinheit (bzw. in der Förderleitung) vorliegt. Dies kann beispielsweise daran liegen, dass die Fördereinheit sich in einer langen Betriebspause entleert hat und/oder daran, dass die Fördereinheit (Pumpe) Luft ansaugt, wenn an einer Ansaugstelle für das flüssige Additiv in dem Tank kein flüssiges Additiv vorliegt.

Luft in einer Fördereinheit ist oft problematisch. Durch die Luft in der Fördereinheit, kann die Förderung behindert bzw. die Förderleistung der Fördereinheit reduziert sein. Außerdem kann nicht klar festgestellt werden, wie viel flüssiges Additiv gefördert bzw. in das Abgassystem zugegeben wird, wenn Luft in der Fördereinheit vorliegt, weil nicht erkannt werden kann, ob flüssiges Additiv oder lediglich Luft durch die Einspritzvorrichtung gefördert wird.

Ein bekanntes Verfahren, das den Betrieb einer solchen Fördereinheit sicherstellen soll, geht beispielsweise aus der EP 1 222 370 B1 hervor. Dieses Verfahren kann bei einer Fördereinheit durchgeführt werden, welche eine Pumpe und ein Leitungssystem aufweist, wobei die Pumpe dazu eingerichtet ist, einen Förderdruck in dem Leitungssystem aufzubauen und flüssiges Additiv aus einem Tank anzusaugen und in das Leitungssystem zu fördern. An das Leitungssystem grenzt ein Entlüftungsventil an, welches mit einer Rücklaufleitung verbunden ist und über welches flüssiges Additiv bzw. Luft, welche sich in dem Leitungssystem befindet, in den Tank zurückgeführt werden kann. An das Leitungssystem grenzt auch ein Drucksensor an, mit welchem der Druck in dem Leitungssystem überwacht werden kann. Wenn der Druck in dem Leitungssystem unterhalb eines Schwellwertes liegt, wird das beschriebene Entlüftungsventil geöffnet. Der Druck in dem Leitungssystem sinkt dann zunächst weiter ab und es setzt eine Kreisförderung durch das Leitungssystem und die Rücklaufleitung ein, durch welche die Luft aus dem Leitungssystem hinaus durch die Rücklaufleitung zurück in den Tank gespült wird.

Nachteilig an diesem Verfahren ist, dass während der Entlüftung der Druck in dem Leitungssystem absinkt und daher keine dosierte genaue Förderung von flüssigem Additiv durch die Fördereinheit erfolgen kann. Für eine genau dosierte Förderung ist es regelmäßig erforderlich, dass der für die Förderung notwendige Druck in dem Leitungssystem vorliegt. Dies liegt beispielsweise daran, dass die Durchflussmenge an flüssigem Additiv durch das Leitungssystem und/oder durch ein Dosierventil von dem Druck im Leitungssystem abhängig ist. Problematisch ist ebenfalls, dass hiermit eine Notlösung vorgeschlagen wird, wenn das gesamte Fördersystem bereits nicht mehr funktioniert, insbesondere also der zur Förderung erforderliche Druck nicht mehr aufgebaut werden kann. Die dann nur sehr begrenzten oder langwierigen Möglichkeiten zur Behebung dieses Defekts bergen die Gefahr, dass die weiter ablaufende Abgasnachbehandlung dauerhaft gestört ist und/oder eine Beseitigung des Defekts noch während des Betriebes des Automobils nicht mehr möglich ist.

Aus der DE 10 2009 056 181 A1 ist ein Verfahren zum Betrieb einer Fördervorrichtung für ein Reduktionsmittel bekannt, Bei welchem eine Dosierung von Reduktionsmittel über eine Injektoröffnungszeit erfolgt. Zu einem vorgegebenen Zeitpunkt wird eine Entlüftungsprozedur durchgeführt, bei der zunächst eine Ist-Steigung einer Druck-Fördervolumen-Kennlinie in der Fördervorrichtung bestimmt wird und anschließend durch den Vergleich der bestimmten Steigung mit einer Soll-Steigung ein Luftblasenvolumen berechnet wird. Anschließend wird das berechnete Luftblasenvolumen zur Entlüftung durch den Injektor gefördert, wenn das berechnete Luftblasenvolumen größer ist als ein maximal zulässiges Luftblasenvolumen.

Ausgehend von diesem Stand der Technik ist es Aufgabe der hier vorliegenden Erfindung, die im Zusammenhang mit dem Stand der Technik geschilderten technischen Probleme zu lösen bzw. zumindest zu lindern. Es soll insbesondere ein besonders vorteilhaftes Verfahren zur Entlüftung einer Fördereinheit für ein flüssiges Additiv offenbart werden. Hierbei sollen insbesondere auch die Sensitivität der Überwachung und die Dosiergenauigkeit langfristig verbessert werden, wobei gleichzeitig mit geringem Aufwand ein nachrüstbares System bereitgestellt wird.

Erreicht wird dies mit einem Verfahren gemäß den Merkmalen des Patentanspruchs 1. Weitere vorteilhafte Ausgestaltungen der Erfindung sind in den abhängig formulierten Patentansprüchen angegeben. Die in den Patentansprüchen einzeln aufgeführten Merkmale sind in beliebiger, technologisch sinnvoller, Weise miteinander kombinierbar und können durch erläuternde Sachverhalte aus der Beschreibung ergänzt werden, wobei weitere Ausführungsvarianten der Erfindung aufgezeigt werden.

Vorgeschlagen wird ein Verfahren zur Entlüftung einer Fördereinheit für ein flüssiges Additiv, wobei die Fördereinheit eine Dosierpumpe, mit welcher eine genaue Dosierung des flüssigen Additivs erfolgen kann, mit einem beweglichen Pumpenelement und eine Förderleitung aufweist, wobei das Verfahren zumindest die folgenden Schritte umfasst:
a) Druckaufbau in der Förderleitung durch eine Bewegung des beweglichen Pumpenelements bis ein Förderdruck in der Förderleitung erreicht wird;
b) Feststellen, wann während Schritt a) ein vorgegebener Prüfdruck in der Förderleitung erreicht ist;
c) Ermitteln einer Pumpenelementstellung, wenn der Prüfdruck erreicht ist;
d) Vergleichen der Pumpenelementstellung mit einer vorgegebenen Grenzstellung und Feststellen von Luft in der Förderleitung, wenn die Pumpenelementstellung die vorgegebene Grenzstellung überschreitet; und
e) Einleitung eines Spülvorgangs für zumindest einen Teil der Förderleitung, wenn in Schritt d) Luft in der Förderleitung festgestellt wurde.

Die Fördereinheit hat eine Förderleitung. Die Förderleitung ist vorzugsweise in einen Ansaugleitungsabschnitt und einen Druckleitungsabschnitt einteilbar, wobei die Pumpe zwischen beiden Abschnitten positioniert ist-Über den Ansaugleitungsabschnitt kann flüssiges Additiv aus einem Tank für das flüssige Additiv angesaugt werden. Über den Druckleitungsabschnitt kann flüssiges Additiv abgegeben werden. Flüssiges Additiv kann über den Druckleitungsabschnitt an eine Einspritzvorrichtung beispielsweise in eine Abgasbehandlungsvorrichtung zugeführt werden. Die Einspritzvorrichtung kann einen elektronisch ansteuerbaren Injektor aufweisen, der aktiv geöffnet und geschlossen werden kann. Die Einspritzvorrichtung kann eine Düse aufweisen, mit der das flüssige Additiv beispielsweise beschleunigt, zerstäubt und/oder gleichmäßig verteilt werden kann.

Die Pumpe ist in der Förderleitung zwischen dem Ansaugleitungsabschnitt und dem Druckleitungsabschnitt angeordnet. Die Pumpe verbindet den Ansaugleitungsabschnitt mit dem Druckleitungsabschnitt.

Die Pumpe ist vorzugsweise eine pulsförmig und/oder schrittweise arbeitende Pumpe. Das bewegliche Pumpenelement ist in/an einer Pumpenkammer der Pumpe hin und her bewegbar. An die Pumpenkammer können Pumpenventile angrenzen. Ein erstes Pumpenventil ist dann zwischen der Pumpenkammer und der Ansaugleitung angeordnet, und ein weiteres zwischen der Pumpenkammer und der Druckleitung. Die Pumpenventile geben eine Strömungsrichtung von der Ansaugleitung in die Pumpenkammer und von der Pumpenkammer in die Druckleitung vor. Durch die Hinbewegung und Herbewegung des beweglichen Pumpenelements wird das Volumen der Pumpenkammer vergrößert und verkleinert und so wird eine Förderung des flüssigen Additivs mit der Pumpe durchgeführt. Das bewegliche Pumpenelement kann beispielsweise von einem Kolben, von einem Schieber oder von einer Membran gebildet sein. Es ist auch möglich, dass das bewegliche Pumpenelement mehrteilig ausgebildet ist und beispielsweise aus einem Kolben und einer Membran besteht, wobei eine Bewegung des Kolbens über ein Übertragungsmedium (beispielsweise ein Fluid wie ein Öl) auf die Membran übertragen wird. Dann erfolgt ein indirekter Antrieb der Membran, in dem der Kolben angetrieben wird.

Die Pumpe hat vorzugsweise einen Rotationsantrieb, der eine Rotationsbewegung durchführt, die über ein Übersetzungsmittel auf das bewegliche Pumpenelement übertragen wird, welches eine lineare Bewegung auf und ab durchführt. Die Bewegung des Pumpenelements ist dann vorzugsweise sinusförmig. Das Übersetzungsmittel kann beispielsweise eine Kurvenscheibe, eine Nocke, eine Nockenwelle und/oder ein Pleuel sein. Die Bewegung des beweglichen Pumpenelements während der Förderung von flüssigem Additiv ist einteilbar in eine Saugphase und in eine Förderphase. Während der Saugphase vergrößert sich das Volumen der Pumpenkammer und flüssiges Additiv wird über die Ansaugleitung in die Pumpenkammer gesaugt. Während der Förderphase verkleinert sich das Volumen der Pumpenkammer und flüssiges Additiv wird aus der Pumpenkammer hinaus in den Druckleitungsabschnitt gedrückt.

Der Rotationsantrieb der Pumpe wird vorzugsweise so betrieben, dass die Saugphase im Verhältnis zur Förderphase relativ kurz ist. Vorzugsweise beträgt die Förderphase zeitlich zumindest das 5-flache oder sogar das 10-fache der Saugphase. Der Rotationsantrieb ist also so ausgebildet, dass er einen Teil einer Rotationsbewegung, in welchem die Saugphase stattfindet, relativ schnell ausführen kann, während er während der Förderphase langsamer betrieben werden kann. Dies wird durch einen entsprechenden Antriebsmotor des Rotationsantriebs ermöglicht.

Während einer Förderphase der Förderpumpe finden vorzugsweise mehrere Dosiervorgänge statt. Mit einem Dosiervorgang ist hier gemeint, dass eine spezifische Dosieranforderung eines Steuergeräts, welches die Fördereinheit steuert, erfüllt wird. Das Volumen der Pumpenkammer ist dementsprechend so gewählt, dass in der Pumpenkammer mehr flüssiges Additiv enthalten ist, als zur Erfüllung einer einzelnen Dosieranforderung regelmäßig notwendig ist. Während der Förderphase wird das bewegliche Pumpenelement der Pumpe vorzugsweise schrittweise zur Erfüllung der einzelnen Dosieranforderungen weiterbewegt. Wenn die Förderphase abgeschlossen ist, beginnt vorzugsweise eine beschleunigte Bewegung des beweglichen Pumpenelementes, um die zeitlich kurze Saugphase schnell durchzuführen und die Pumpe in die nächste Förderphase zu versetzen.

Zum Zweck der exakten Durchführung der einzelnen Dosiervorgänge ist vorzugsweise zumindest ein Messmittel vorgesehen, über welche die Position des beweglichen Pumpenelements sehr genau festgestellt werden kann. Beispielsweise ist der gesamte Bewegungsbereich des beweglichen Pumpenelements mit dem Messmittel derart genau aufgelöst/detektierbar, dass fünfzig, hundert oder mehr verschiedene Positionen des beweglichen Pumpenelements erkannt werden können. Das Messmittel zur Erkennung der Position des beweglichen Pumpenelements kann bei einer Pumpe mit Rotationsantrieb auch an dem Rotationsantrieb vorgesehen sein. Mithilfe des Messmittels ist es dann möglich zu erkennen, in welchem Winkel der Rotationsantrieb aktuell steht bzw. wie viele Schritte bereits absolviert wurden. Dadurch, class das bewegliche Pumpenelement über ein Übersetzungsmittel an den Rotationsantrieb angekoppelt ist, kann dann mit dem Messmittel auch die Position des beweglichen Pumpenelements erkannt werden.

Die Förderleitung der Fördereinheit ist vorzugsweise insbesondere im Bereich der Druckleitung (nahezu) starr bzw. steif. Dies ist vorteilhaft, damit die durch die Bewegung des beweglichen Pumpenelements aus der Pumpenkammer verdrängte Menge an flüssigem Additiv auch (möglichst) vollständig zu einer an die Förderleitung angeschlossenen Einspritzvorrichtung gelangt, und durch die Verdrängung des flüssigen Additivs aus der Pumpenkammer nicht lediglich die Förderleitung ausgedehnt wird und der Druck in der Förderleitung ansteigt. Die Steifigkeit der Förderleitung ist beispielsweise so ausgebildet, dass die Förderleitung sich bei einem Druckanstieg von 1 bar um weniger als 1 % verformt bzw. das mit flüssigem Additiv gefüllte Volumen in der Fördereinheit um weniger als 1 % zunimmt.

Bei der Durchführung des beschriebenen Verfahrens zur Entlüftung der Fördereinheit wird durch eine Bewegung des beweglichen Pumpenelements (jeweils) ein Förderdruck in der Förderleitung aufgebaut. Dies geschieht, wenn eine Saugphase der Fördereinheit bzw. der Pumpe abgeschlossen ist und eine Förderphase der Pumpe beginnt. Vom Beginn der Förderphase an, muss das bewegliche Pumpenelement vorzugsweise nur wenig bewegt werden, damit der Förderdruck aufgebaut wird. Bei einer Pumpe mit einem Rotationsantrieb entspricht die Bewegung des beweglichen Pumpenelements bis zum Aufbau des Förderdrucks vorzugsweise weniger als 45° und besonders bevorzugt weniger als 30°, also weniger als einem Achtel und besonders bevorzugt weniger als einem Zwölftel einer vollständigen Umdrehung des Rotationsantriebs (mit der die Bewegung des Pumpenelements in der (einzelnen) Saugphase und der (einzelnen) Förderphase realisiert wird).

Die Pumpe ist vorzugsweise so ausgebildet, dass der Förderdruck in der Förderleitung unabhängig davon aufgebaut werden kann, ob Luft in der Fördereinheit vorliegt und/oder erkannt wird. Dies kann dadurch erreicht werden, dass das maximale Pumpenkammervolumen und das minimale Pumpenkammervolumen so gewählt sind, dass eine entsprechende Druckerhöhung selbst dann möglich ist, wenn die Pumpenkammer vollständig mit einem kompressiblen Medium gefüllt ist. Das maximale Pumpenkammervolumen und das minimale Pumpenkammervolumen sind durch den möglichen Bewegungsbereich des beweglichen Pumpenelementes in der Pumpenkammer vorgegeben. Das maximale Pumpenkammervolumen beträgt bevorzugt mindestens das 10-fache des minimalen Pumpenkammervolumens.

Der Druck in dem Druckleitungsabschnitt der Förderleitung schwankt während des Betriebs typischerweise zwischen einem minimalen Druck und einem maximalen Druck. Der maximale Druck liegt vorzugsweise während eines Großteils der Förderphase vor und entspricht insbesondere dem Förderdruck. Der Wert des Förderdrucks wird beispielsweise durch den Öffnungsdruck eines selbstöffnenden Ventils in der Einspritzvorrichtung und/oder (im Falle eines aktiven Injektors in der Einspritzvorrichtung) durch ein Steuergerät vorgegeben, welches den aktiven Injektor öffnet, wenn der Druck im Druckleitungsabschnitt den Förderdruck erreicht. Der minimale Druck ist konstruktionsbedingt und stellt sich während der Saugphase in dem Druckleitungsabschnitt ein, weil während der Saugphase von der Pumpe kein flüssiges Additiv gefördert wird.

In Schritt a) wird ein Förderdruck in der Förderleitung bzw. in dem Druckleitungsabschnitt der Förderleitung aufgebaut. Der Förderdruck beträgt vorzugsweise zwischen 3 und 9 bar, besonders bevorzugt zwischen 3,5 und 5 bar. Ein konstanter Förderdruck ist für die mehrmaligen Dosiervorgänge vorteilhaft, weil durch einen konstanten Förderdruck beispielsweise eine gleichmäßige Zerstäubung des flüssigen Additivs an einer Einspritzvorrichtung erreicht werden kann.

Die im Folgenden erläuterten Schritte b), c) und d) des beschriebenen Verfahrens werden vorzugsweise durchgeführt, während Schritt a) parallel weiter durchgeführt wird, also der Druck in der Förderleitung durch die Bewegung des beweglichen Pumpenelements (noch) aufgebaut wird.

In Schritt b) wird festgestellt, wenn in der Förderleitung ein vorgegebener Prüfdruck erreicht ist. Hierzu ist angrenzend an die Förderleitung vorzugsweise ein Drucksensor vorgesehen, mit welchem der Druck in der Förderleitung (insbesondere an dem Druckleitungsabschnitt der Förderleitung) überwacht werden kann. Der vorgegebene Prüfdruck ist ein Druckschwellwert, welcher insbesondere erreicht wird, bevor der gewünschte Förderdruck erreicht ist.

In Schritt c) wird die Pumpenelementstellung ermittelt, die vorliegt, wenn der Prüfdruck erreicht ist. Diese Pumpenelementstellung kann beispielsweise mit einem Messmittel erfasst werden, welches die Stellung bzw. die Position des Pumpenelements überwacht bzw. feststellt. Über die Winkelstellung des Rotationsantriebs kann dann auf die Pumpenelementstellung geschlossen werden.

Dann wird in Schritt d) die festgestellte Pumpenelementstellung mit einer vorgegebenen Grenzstellung verglichen. Die vorgegebene Grenzstellung entspricht einer vorgegebenen Position, welche das bewegliche Pumpenelement während der Förderphase hat. Wenn das bewegliche Pumpenelement während der Förderphase weiter als diese vorgegebene Grenzstellung bewegt werden muss, damit der Prüfdruck in der Förderleitung erreicht wird, wird gemäß Schritt d) davon ausgegangen, dass eine Druckerhöhungsgeschwindigkeit in der Leitung aufgrund einer unerwünscht hohen Menge Luft in der Förderleitung mit der gewünschten Pumpenaktivität nicht mehr erreichbar ist. Damit ist nun mehr Energie nötig, den Förderdruck einzustellen, so dass auch nur noch eine geringere Anzahl von Dosiervorgängen daran anschließend noch möglich ist. Wenn der Prüfdruck in der Förderleitung bereits erreicht wird, bevor das bewegliche Pumpenelement die vorgegebene Grenzstellung erreicht, wird davon ausgegangen, dass keine Menge Luft in der Förderleitung vorliegt, die die Dosierung spürbar negativ beeinflusst.

Sollte die vorstehend beschriebene Druckänderungsgeschwindigkeit in der Druckaufbauphase zu gering sein bzw. in Schritt d) (zu viel) Luft in der Förderleitung festgestellt worden sein, wird in Schritt e) ein Spülvorgang für zumindest einen Teil (oder sogar der gesamten) Förderleitung durchgeführt.

Durch das beschriebene Verfahren wird sicher Luft in der Fördereinheit erkannt, ohne dass tatsächlich schon ein Druckabfall in der Förderleitung der Fördereinheit bei der Dosierung auftritt. So kann eine erhöhte Fördergenauigkeit erreicht werden. Auch ist es nicht erforderlich, dass die Dosierung von flüssigem Additiv an einer Einspritzvorrichtung unterbrochen wird, wenn Luft in der Förderleitung erkannt wird. Dies stellt gegenüber dem Stand der Technik einen beachtlichen Vorteil dar.

Weiterhin vorteilhaft ist das beschriebene Verfahren, wenn die Schritte a) bis d) während einer Förderphase der Fördereinheit durchgeführt werden und Schritt e) erst nach Abschluss der Förderphase durchgeführt wird.

Wie weiter oben bereits beschrieben, ist der Betrieb der Pumpe der Fördereinheit in Förderphasen und Saugphasen unterteilbar. Es ist ein besonderer Vorteil des beschriebenen Verfahrens, dass für den Fall, dass während einer Förderphase Luft in der Fördereinheit erkannt wind, diese Förderphase zunächst abgeschlossen werden kann, bevor der Entlüftungsvorgang eingeleitet wird. Dies ermöglicht es, die Entlüftung der Fördereinheit zu einem Zeitpunkt vorzusehen, wenn keine Dosieranforderungen für flüssiges Additiv an die Fördereinheit gestellt werden. Die Dosierung von flüssigem Additiv kann durch das beschriebene Verfahren trotz einer (erst sehr kleinen) Luftblase zunächst ungestört weiter durchgeführt werden. Dies wird durch das Verfahren möglich, weil der Förderdruck in der Förderleitung auch erreicht wird, wenn Luft in der Förderleitung vorliegt.

Weiterhin vorteilhaft ist das beschriebene Verfahren, wenn es regelmäßig wiederholt durchgeführt wird und Schritt e) nur durchgeführt wird, wenn in Schritt d) mehrmals hintereinander Luft in der Förderleitung festgestellt wird.

Gerade weil die Vorgehensweise gemäß dem beschriebenen Verfahren zum Erkennen von Luft in der Förderleitung eine sehr hohe Sensibilität aufweist, besteht die Möglichkeit, dass Luft in der Förderleitung z. B. aufgrund überlagernder Ereignisse (Fahrzeugvibrationen, Verunreinigungen, Temperaturschwankungen, etc.) fehlerhaft erkannt wird. Daher ist es vorteilhaft zunächst abzuwarten, ob in mehreren aufeinander folgenden Förderphasen jeweils Luft erkannt wird, bzw. das beschriebene Kriterium zur Erkennung von Luft vorliegt. Erst wenn die Erkennung von Luft auf bestätigt wurde, wird dann der Schritt e) - also der Spülvorgang - für die Förderleitung durchgeführt.

Weiterhin vorteilhaft ist das beschriebene Verfahren, wenn die Verfahrensschritte a) bis d) in jeder Förderphase der Fördereinheit durchgeführt werden. Die Verfahrensschritte a) bis d) behindern den regulären Betrieb der Fördereinheit nicht. Es ist daher möglich, diese Verfahrensschritte während jeder Förderphase der Fördereinheit durchzuführen, ohne dass eine Beeinträchtigung der Förderung der Dosierung von flüssigem Additiv mit der Fördereinheit stattfindet. So kann erreicht werden, dass Luft in der Fördereinheit bzw. in der Förderleitung besonders frühzeitig erkannt wird und falls die Luft zu einer Beeinträchtigung der Förderung führen könnte, besonders schnell reagiert werden kann.

Auch vorteilhaft ist das beschriebene Verfahren, wenn die Fördereinheit eine Einspritzvorrichtung aufweist, durch welche das flüssige Additiv dosiert abgegeben werden kann, und bei dem Spülvorgang in Schritt e) Luft durch die Einspritzvorrichtung aus der Förderleitung hinaus gefördert wird.

Für eine derartige Verfahrensführung ist es nicht erforderlich, dass die Fördereinheit eine Rücklaufleitung aufweist. Das Verfahren kann daher mit einer besonders kostengünstigen und besonders einfach aufgebauten Fördereinheit durchgeführt werden. Für diesen Spülvorgang kann ein veränderter Betrieb der Pumpe und/oder der Einspritzvorrichtung durchgeführt werden, bis die unerwünscht hohe Menge Luft (zusammen mit dem flüssigen Additiv) aus der Förderleitung ausgetrieben werden. Danach kann dann wieder in den normalen Dosiermodus zurückgewechselt werden.

Weiterhin vorteilhaft ist das beschriebene Verfahren, wenn die Fördereinheit eine Rücklaufleitung aufweist, welche von der Förderleitung abzweigt, und bei dem Spülvorgang in Schritt e) Luft durch die Rücklaufleitung aus der Förderleitung hinaus gefördert wird.

Für eine derartige Verfahrensführung ist es sinnvoll, dass die Fördereinheit eine Rücklaufleitung hat, die von der Förderleitung abzweigt und zurück zu einem Tank für das flüssige Additiv führt. Diese Rücklaufleitung ist vorzugsweise nahe der Abzweigstelle durch ein Rücklaufventil absperrbar, das während des regulären Förderbetriebs der Fördereinheit verschlossen ist. Während des Spülvorgangs durch die Rücklaufleitung wird eine an die Förderleitung angeschlossene Einspritzvorrichtung verschlossen, so dass kein flüssiges Additiv durch die Einspritzvorrichtung abgegeben wird. Das an/in der Rücklaufleitung vorgesehene Rücklaufventil wird geöffnet, so dass ein Spülkreis durch die Förderleitung und durch die Rücklaufleitung entsteht. Während des Spülvorgangs wird das in der Förderleitung vorliegende Gemisch aus flüssigem Additiv und Luft zurück in den Tank befördert. In dem Tank trennen sich das flüssige Additiv und die Luft durch die Schwerkraft und/oder es können Maßnahmen getroffen sein, die ein erneutes Ansaugen von Luft verhindern.

Beim Spülvorgang der Förderleitung wird regelmäßig ein Gemisch aus Luft und flüssigem Additiv aus der Förderleitung hinaus gespült. Somit geht beim Spülvorgang zwangsläufig auch eine gewisse Menge an flüssigem Additiv verloren bzw. wird dieses nicht mehr (exakt) kontrolliert zugegeben. Daher ist es vorteilhaft, wenn die Fördereinheit eine Rücklaufleitung hat, die zurück in den Tank für das flüssige Additiv führt.

Weiterhin vorteilhaft ist das beschriebene Verfahren, wenn der vorgegebene Prüfdruck deutlich kleiner ist als der Förderdruck und (vorzugsweise) weniger als 0,5 bar, besonders bevorzugt weniger als 0,2 bar oberhalb eines minimalen Drucks in der Förderleitung liegt.

Bei einer solchen Wahl des Prüfdrucks ist es möglich, Luft in der Förderleitung besonders schnell am Beginn der Förderphase zu erkennen, ohne dass bereits eine Beeinträchtigung der Förderung von flüssigem Additiv stattgefunden hat. Gegebenenfalls ist auch möglich, dass der Prüfdruck anpassbar ist. Somit kann der Prüfdruck über die Dauer des Betriebs der Fördereinheit auch (automatisch und/oder manuell) angepasst werden, beispielsweise um Alterungseffekte, Reparatur-/Wartungsanpassungen oder verschiedene Additive zu berücksichtigen.

Im Rahmen der Erfindung wird auch eine Fördereinheit für ein flüssiges Additiv beschrieben, aufweisend eine Pumpe mit einem beweglichen Pumpenelement, eine Förderleitung und ein Steuergerät, welches zur Durchführung beschriebenen Verfahrens eingerichtet ist. Das Steuergerät weist hierzu Datenverbindungen hin zu der Pumpe (Messmitteln), einem Drucksensor der Förderleitung und/oder zu einem Ventil der Fördereinheit auf. Bevorzugt umfasst das Steuergerät eine Speichereinheit und eine Recheneinheit, so dass einerseits vorgegebene Werte für den Vergleich mit dem Prüfdruck, Förderdruck, der Pumpenstellung etc. bereitgestellt werden und ein Vergleich dieser Messwerte und Referenzwerte durchführbar ist. Gegebenenfalls kann das Speicherelement auch beschreibbar sein, so dass hier auch eine Adaption vorgenommen werden kann. Das Steuergerät kann ein separates Modul sein, es ist aber auch möglich, dass das Steuergerät in einer übergeordneten Kontrolleinheit integriert ist, die beispielsweise die Dosierung selbst kontrolliert.

Darüber hinaus wird ein Kraftfahrzeug vorgeschlagen, aufweisend eine Verbrennungskraftmaschine und eine beschriebene Fördereinheit, mit welcher flüssiges Additiv in die Abgasbehandlungsvorrichtung gefördert werden kann.

Ganz besonders bevorzugt findet die Erfindung Anwendung bei einer Diesel- Verbrennungskraftmaschine, wobei eine Harnstoff-Wasser-Lösung stromauf eines SCR-Katalysators in eine Abgasbehandlungsvorrichtung dosiert zugegeben wird. Hierbei ist die Fördereinheit bevorzugt mit einer Dosierpumpe, einem passiven Dosierventil und einer Rücklaufleitung aufgeführt, die mit einem Rücklaufventil aktivierbar ist. In jedem Fall kann die Zugabe der Harnstoff-Wasser-Lösung mit und/oder ohne eine Druckluft-Unterstützung erfolgen.

Die Erfindung sowie das technische Umfeld werden nachfolgend anhand der Figuren näher erläutert. Die Figuren zeigen besonders bevorzugte Ausführungsbeispiele, auf die die Erfindung jedoch nicht begrenzt ist. Insbesondere ist darauf hinzuweisen, dass die Figuren und insbesondere die dargestellten Größenverhältnisse nur schematisch sind. Es zeigen:
- Fig. 1:: eine erste Ausführungsvariante einer Fördereinheit,
- Fig. 2:: eine zweite Ausführungsvariante einer Fördereinheit,
- Fig. 3:: eine Pumpe für eine Fördereinheit,
- Fig. 4:: ein Kraftfahrzeug, aufweisend eine Fördereinheit,
- Fig. 5:: ein erstes Diagramm des Betriebs des beschriebenen Verfahrens, und
- Fig. 6:: ein zweites Diagramm des Betriebs des beschriebenen Verfahrens.

Die in den Figuren verwendeten gleichen Bezugszeichen sollen jeweils auf gleiche Bauteile verweisen. Soweit nachfolgend nicht explizit angegeben ist, dass die dargestellten technischen Merkmale miteinander in der dargestellten Weise miteinander verbunden sein müssen, können die Merkmale in den Figuren einzeln und/oder mit technischen Merkmalen anderer Figuren gemeinsam betrachtet werden. Daraus entnimmt der Fachmann, dass eine Vielzahl von Abwandlungen der dargestellten Ausführungsvarianten möglich ist.

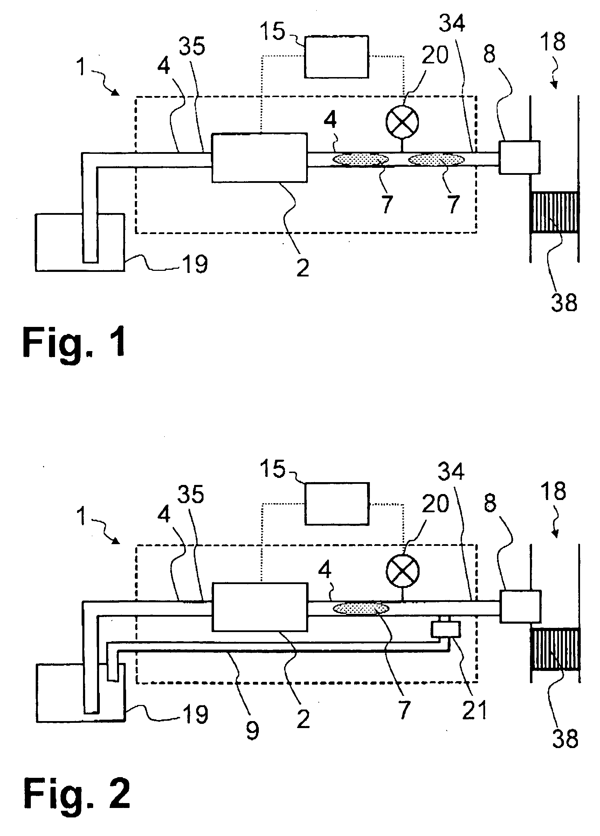

In den Fig. 1 und 2 ist jeweils eine Fördereinheit 1 dargestellt, mit welcher ein flüssiges Additiv (insbesondere eine Harnstoff-Wasser-Lösung) aus einem Tank 19 zu einer Einspritzvorrichtung 8 transportiert werden kann, wobei die Einspritzvorrichtung 8 das flüssige Additiv in eine Abgasbehandlungsvorrichtung 18 zuführt. Dabei wird insbesondere flüssige Harnstoff-Wasser-Lösung mit dem in der Abgasbehandlungsvorrichtung 18 strömenden Abgas vermischt und einem SCR-Katalysator 38 zugeführt. Dort kann das SCR-Verfahren zur Reduktion von Stickoxidverbindungen im Abgas durchgeführt werden, wobei dem Fachmann die Ausgestaltung solcher SCR-Katalysatoren (z. B. Wabenkörper mit entsprechender katalytischer Beschichtung) bekannt sind.

Die Fördereinheit gemäß Fig. 1 weist eine Pumpe 2 auf, welche sich in einer Förderleitung 4 befindet, die sich vom Tank 19 zu der Einspritzvorrichtung 8 hin erstreckt. Die Förderleitung 4 kann in einen sich vom Tank 19 zur Pumpe erstreckenden Ansaugleitungsabschnitt 35 und in einen sich von der Pumpe 2 zur Einspritzvorrichtung 8 erstreckenden Druckleitungsabschnitt 34 unterteilt werden. An die Förderleitung 4 ist ein Drucksensor 20 angeschlossen, mit dem der Druck in der Förderleitung 4 (im Druckleitungsabschnitt 34) bestimmt und/oder überwacht werden kann. Der Drucksensor 20 und die Pumpe 2 sind an ein Steuergerät 15 angeschlossen. Mit dem Steuergerät 1,5 kann das beschriebene Verfahren durchgeführt werden. In der Fig. 1 ist weiter angedeutet, dass in der Förderleitung 4 auch Luft 7 (hier nach Art von Blasen dargestellt) vorliegt. Diese Luft 7 kann mit dem beschriebenen Verfahren mit der Förderleitung 4 hinausgefördert werden.

Bei der Fördereinheit gemäß Fig. 2 kann die Förderleitung 4 ebenfalls in einem Ansaugleitungsabschnitt 35 vom Tank 19 zur Pumpe 2 und in einen Druckleitungsabschnitt 34 von der Pumpe 2 zur Einspritzvorrichtung 8 unterteilt werden. Gemäß der Fig. 2 zweigt von der Förderleitung 4 im Bereich des Druckleitungsabschnitts 34 eine Rücklaufleitung 9 ab, welche mit einem Rücklaufventil 21 verschließbar ist und die zurück in den Tank 19 führt. An die Förderleitung 4 gemäß Fig. 2 ist auch ein Drucksensor 20 angeschlossen, mit dem der Druck in der Förderleitung 4 (im Druckleitungsabschnitt 34) bestimmt/überwacht werden kann. Der Drucksensor 20 und die Pumpe 2 sind auch gemäß Fig. 2 mit einem Steuergerät 15 verbunden mit welchem das beschriebene Verfahren durchgeführt werden kann.

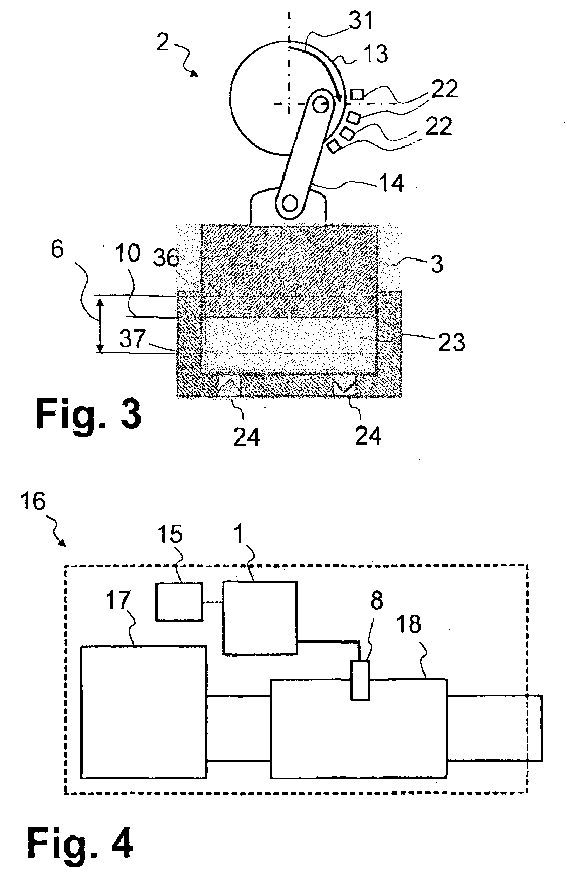

Fig. 3 zeigt skizzenhaft eine Pumpe 2, welche für eine Fördereinheit geeignet ist, mit der das beschriebene Verfahren durchgeführt werden kann. Die Pumpe 2 ist eine Dosierpumpe, mit welcher eine genaue Dosierung des flüssigen Additivs erfolgen kann (und die Dosierung nicht über ein zeitlich vorgegebenes Öffnungssignal eines Injektors vorgegeben wird). Die Pumpe 2 weist ein bewegliches Pumpenelement 3 auf, das in einer Pumpenkammer hin und her bewegbar ist, um das Volumen der Pumpenkammer 23 zu verändern. Durch eine Bewegung des beweglichen Pumpenelements 3 kann das Volumen der Pumpenkammer zwischen einem minimalen Pumpenkammervolumen 37 und einem maximalen Pumpenkammervolumen 36 verändert werden. An die Pumpenkammer 23 grenzen zwei Pumpenventile 24 an, über welche flüssiges Additiv während einer Ansaugphase der Pumpe 2 in die Pumpenkammer 23 gesaugt und während einer Förderphase der Pumpe 2 aus der Pumpenkammer 23 hinausgedrückt werden kann. Das bewegliche Pumpenelement 3 ist zwischen dem minimalen Pumpenkammervolumen 37 und dem maximalen Pumpenkammervolumen 36 in einem Bewegungsbereich 6 beweglich. Eine beliebige Pumpenelementstellung 10 in dem Bewegungsbereich 6 kann mit Hilfe eines Messmittels 22 erkannt werden. Das Messmittel 22 ist an einem Rotationsantrieb 13 der Pumpe 2 angeordnet. Der Rotationsantrieb 13 ist über ein Übersetzungsmittel 14, welches gemäß Fig. 3 als Pleuel ausgeführt ist, mit dem beweglichen Pumpenelement 3 verbunden. Die Winkelstellung 31 ist aufgrund dieser festen Verbindung für die Pumpenelementstellung 10 repräsentativ.

Fig. 4 zeigt ein Kraftfahrzeug 16 (z. B. ein Personenkraftwagen, ein Boot, ein Landfahrzeug oder ein Lastkraftwagen), aufweisend eine Verbrennungskraftmaschine 17 (z. B. ein Dieselmotor) und eine Abgasbehandlungsvorrichtung 18, welche zur Reinigung der Abgase der Verbrennungskraftmaschine 17 eingerichtet ist. Mithilfe einer Einspritzvorrichtung 8 ist der Abgasbehandlungsvorrichtung 18 ein flüssiges Additiv zuführbar. Mit dem flüssigen Additiv kann in der Abgasbehandlungsvorrichtung 18 ein Abgasreinigungsverfahren, beispielsweise das Verfahren der selektiven katalytischen Reduktion, durchgeführt werden. Die Einspritzvorrichtung 8 wird von einer Fördereinheit 1 mit flüssigem Additiv versorgt. An die Fördereinheit 1 ist ein Steuergerät 15 angeschlossen, mit welchem das beschriebene Verfahren durchgeführt werden kann.

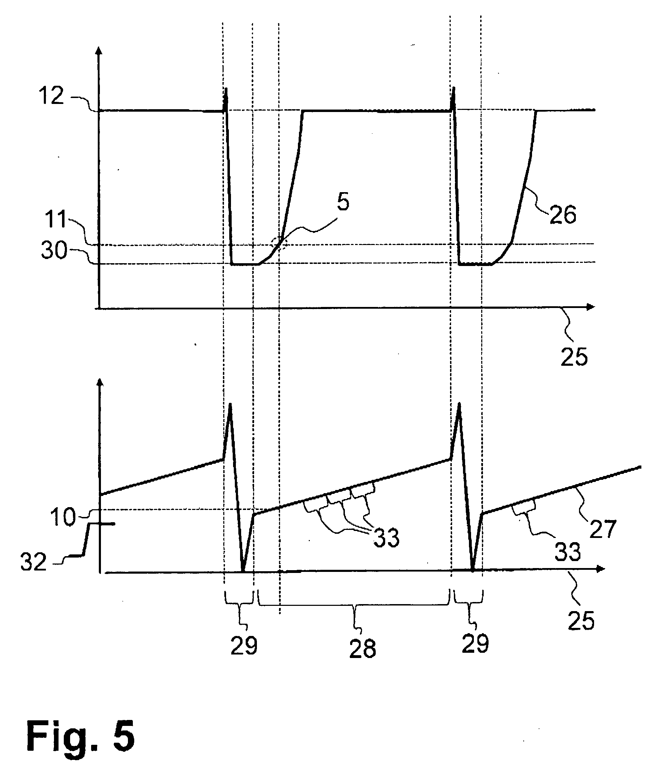

In Fig. 5 ist ein Diagramm dargestellt, welches den Betrieb der Fördereinheit veranschaulichen soll. Fig. 5 zeigt untereinander 3 verschiedene Kurven, die jeweils auf einer einheitlichen Zeitachse 25 aufgetragen sind. Die unterste Kurve ist eine Pumpenelementstellungskurve 27, welche die Stellung des Pumpenelements über die Zeit zeigt. In dem Diagramm zu erkennen sind jeweils Saugphasen 29 und Förderphasen 28 der Fördereinheit. Es ist zu erkennen, dass das bewegliche Pumpenelement sich während Saugphasen 29 schneller bewegt, als dies während Förderphasen 28 der Fall ist (betragsmäßig größere Steigung der Kurve). Eine Saugphase 29 und eine Förderphase 28 zusammen entsprechen einer vollständigen Auf- und Abbewegung des beweglichen Pumpenelements über den gesamten Bewegungsbereich, wie er in Fig. 3 dargestellt ist. Wenn die Pumpe einen Rotationsantrieb aufweist, dann entsprechen eine (einzelne) Saugphase 29 und eine (einzelne) Förderphase 28 vorzugsweise einer (einzelnen) Drehung des Rotationsantriebs um 360'. Im Bereich der untersten Kurve ist auf der senkrechten Achse eine Grenzstellung 32 des beweglichen Pumpenelementes markiert, die für den Schritt d) des beschriebenen Verfahrens zu beachten ist.

Während einer Förderphase 28 wird vorzugsweise eine Vielzahl von Dosieranforderungen 33 erfüllt, welche beispielsweise von einem Streuergerät an die Fördereinheit übermittelt werden. Sobald eine Förderphase 28 vollständig abgeschlossen ist - was an der Stellting des beweglichen Pumpenelements daran erkennbar ist, dass beispielsweise das bewegliche Pumpenelement bis zu einem minimalen Volumen der Pumpenkammer bewegt wurde -, beginnt das bewegliche Pumpenelement sich in der Saugphase 29 sehr schnell zu bewegen, damit die Fördereinheit möglichst schnell wieder bereit für eine Förderphase 28 ist.

Die mittlere Kurve in Fig. 5 ist eine Druckkurve 26, welche den Druck in der Förderleitung und insbesondere in einem Druckleitungsabschnitt der Förderleitung darstellt. Zu erkennen ist, dass während der Förderphasen 28 größtenteils ein (etwa) konstanter Förderdruck 12 in der Förderleitung vorliegt. Der Förderdruck 12 entspricht vorzugsweise dem maximalen Druck, welcher in der Förderleitung vorliegt, und welcher beispielsweise durch einen Öffnungsdruck eines (passiven, federvorgespannten) Ventils an der Einspritzvorrichtung vorgegeben ist. In der Saugphase fällt der Druck in der Förderleitung bis auf einen minimalen Druck 30 ab. Dies liegt daran, dass während der Saugphase kein flüssiges Additiv in die Förderleitung gefördert wird, durch welche der Druck nach/bei Öffnung des Ventils aufrecht erhalten wird. Zwischen der Förderphase 28 und der Saugphase 29 kann ein in dem Diagramm dargestellter leichter Überschwinger des Drucks auf über den Förderdruck 12 auftreten, welcher sich durch den plötzlichen Start der Bewegung des beweglichen Pumpenelements zu Beginn der Saugphase 29 einstellen kann. Nach Abschluss der Saugphase 29 wird der Druck in der Förderleitung in der Förderphase 28 zunächst aufgebaut. Dies geschieht umso langsamer, je mehr Luft sich in der Förderleitung befindet. Daher wird zu einem Zeitpunkt 5 der Verfahrensschritt b) durchgeführt, bei welchem festgestellt wird, dass der Druck in der Förderleitung einen vorgegebenen Prüfdruck 11 erreicht. Es wird überwacht, welche Pumpenelementstellung 10 vorliegt, wenn der Prüfdruck 11 zum Zeitpunkt 5 erreicht ist. Diese Pumpenelementstellung 10 kann dann verwendet werden, um den Verfahrensschritt d) durchzuführen und festzustellen, ob die Pumpenelementstellung 10 die vorgegebene Grenzstellung 32 überschreitet. Wenn dies der Fall ist, wird angenommen, dass Luft in der Förderleitung vorliegt.

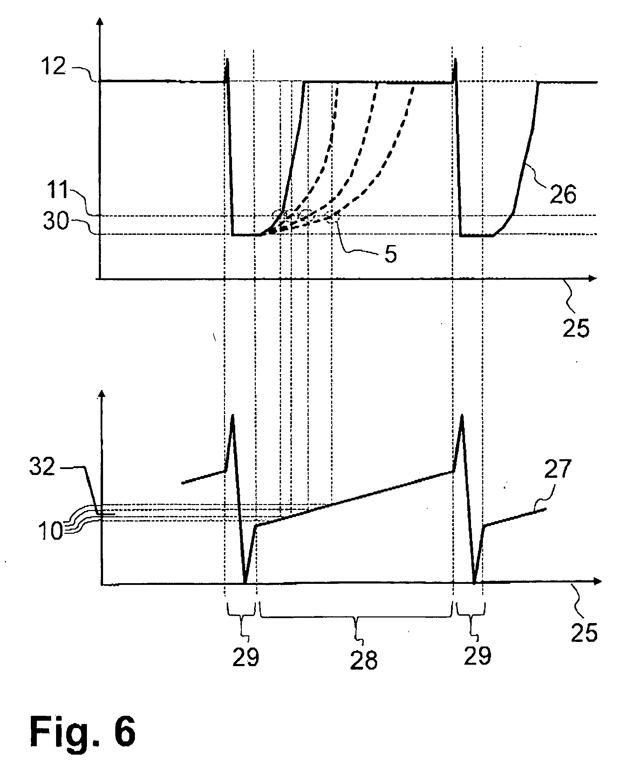

In Fig. 6 ist noch einmal dargestellt, wie sich die Druckkurve 26 verändert, wenn Luft in der Förderleitung vorliegt. Die Druckkurve 26 ist auch gemäß Fig. 6 auf der Zeitachse 25 aufgetragen und wechselt zwischen einem minimalen Druck 30 während Saugphase und einem Förderdruck 12 während Förderphase 28 hin und her. Wenn eine Luftblase in der förderleitung vergrößert ist, verschiebt sich die Druckkurve 26 so wie dies in dem oberen Bereich der Fig. 6 gestrichelt angedeutet ist. Der Zeitpunkt 5 zu welchem ein Prüfdruck 11 in der Förderleitung erreicht ist verschiebt sich damit nach hinten.

Im unteren Bereich der Fig. 6 ist auch die Pumpenelementstellungskurve 27 auf der Zeitachse 25 dargestellt. Die verschiedenen Zeitpunkte 5 entsprechen jeweils verschiedenen Pumpenelementstellungen 10. Eingetragen ist die Grenzstellung 32. Wenn die Pumpenelementstellung 10 die Grenzstellung 32 überschreitet wird in Schritt d) des beschriebenen Verfahrens Luft in der Förderleistung erkannt.

Durch das beschriebene Verfahren wird es möglich, Luft in der Förderleitung einer Fördereinheit für ein flüssiges Additiv besonders zuverlässig zu erkennen, ohne dass die Förderung des flüssigen Additivs mit der Fördereinheit unterbrochen werden muss. Somit gelingt es der Erfindung, die im Zusammenhang mit dem Stand der Technik geschilderten technischen Probleme zu lösen bzw. zumindest zu lindern. Es wurde ein besonders vorteilhaftes Verfahren zur Entlüftung einer Fördereinheit für ein flüssiges Additiv offenbart, wobei auch die Sensitivität der Überwachung und die Dosiergenauigkeit langfristig verbessert werden kann und gleichzeitig mit geringem Aufwand ein nachrüstbares System bereitgestellt wurde.

### Bezugszeichenliste

1 Fördereinheit
2 Pumpe
3 bewegliches Pumpenelement
4 Förderleitung
5 Zeitpunkt
6 Bewegungsbereich
7 Luft
8 Einspritzvorrichtung
9 Rücklaufleitung
10 Pumpenelementstellung
11 Prüfdruck
12 Förderdruck
13 Rotationsantrieb
14 Übersetzungsmittel
15 Steuergerät
16 Kraftfahrzeug
17 Verbrennungskraftmaschine
18 Abgasbehandlungsvorrichtung
19 Tank
20 Drucksensor
21 Rücklaufventil
22 Messmittel
23 Pumpenkammer
24 Pumpenventil
25 Zeitachse
26 Druckkurve
27 Pumpenelementstellungskurve
28 Förderphase
29 Saugphase
30 minimaler Druck
31 Winkelstellung
32 Grenzstellung
33 Dosieranforderung
34 Druckleitungsabschnitt
35 Ansaugleitungsabschnitt
36 maximales Pumpenkammervolumen
37 minimales Pumpenkammervolumen
38 SCR-Katalysator

## Patentansprüche

1. Verfahren zur Entlüftung einer Fördereinheit (1) für ein flüssiges Additiv, wobei die Fördereinheit (1) eine Dosierpumpe (2), mit welcher eine genaue Dosierung des flüssigen Additivs erfolgen kann mit einem beweglichen Pumpenelement (3) und eine Förderleitung (4) aufweist, umfassend zumindest die folgenden Schritte:
a) Druckaufbau in der Förderleitung (4) durch eine Bewegung des beweglichen Pumpenelementes (3) bis ein Förderdruck (12) in der Förderleitung (4) erreicht wird;
b) Feststellen, wann während Schritt a) ein vorgegebener Prüfdruck (11) in der Förderleitung (4) erreicht ist;
c) Ermitteln einer Pumpenelementstellung (10), wenn der Prüfdruck (11) erreicht ist;
d) Vergleichen der Pumpenelementstellung (10) mit einer vorgegebenen Grenzstellung (32) und Feststellen von Luft (7) in der Förderleitung (4), wenn die Pumpenelementstellung (10) die vorgegebene Grenzstellung (32) überschreitet; und
e) Einleitung eines Spülvorgangs für zumindest einen Teil der Förderleitung (4), wenn in Schritt d) Luft in der Förderleitung (4) festgestellt wurde.

2. Verfahren nach Patentanspruch 1, wobei die Schritte a) bis d) während einer Förderphase (28) der Fördereinheit (1) durchgeführt werden und Schritt e) erst nach Abschluss der Förderphase (28) durchgeführt wird.

3. Verfahren nach einem der vorhergehenden Patentansprüche, wobei das Verfahren regelmäßig wiederholt durchgeführt wird und Schritt e) nur durchgeführt wird, wenn in Schritt d) mehrmals hintereinander Luft (7) in der Förderleitung (4) festgestellt wird.

4. Verfahren nach einem der vorhergehenden Patentansprüche, wobei die Verfahrensschritte a) bis d) in jeder Förderphase (28) der Fördereinheit (1) durchgeführt werden.

5. Verfahren nach einem der Patentansprüche 1 bis 4, wobei die Fördereinheit (1) eine Einspritzvorrichtung (8) aufweist, durch welche das flüssige Additiv dosiert abgegeben werden kann, und bei dem Spühlvorgang in Schritt e) Luft (7) durch die Einspritzvorrichtung (8) aus der Förderleitung (4) hinaus gefördert wird.

6. Verfahren nach einem der Patentansprüche 1 bis 4, wobei die Fördereinheit (1) eine Rücklaufleitung (9) aufweist, welche von der Förderleitung (4) abzweigt, und bei dem Spülvorgang in Schritt e) Luft (7) durch die Rücklaufleitung (9) aus der Förderleitung (4) hinaus gefördert wird.

7. Verfahren nach einem der vorhergehenden Patentansprüche, wobei der vorgegebene Prüfdruck (11) deutlich kleiner ist als der Förderdruck (12) und weniger als 0,5 bar oberhalb eines minimalen Drucks (30) in der Förderleitung (4) liegt.

8. Fördereinheit (1) für ein flüssiges Additiv, aufweisend eine Dosierpumpe (2), mit welcher eine genaue Dosierung des flüssigen Additivs erfolgen kann, mit einem beweglichen Pumpenelement (3), eine Förderleitung (4), und ein Steuergerät (15), welches zur Durchführung eines Verfahrens nach einem der vorhergehenden Patentansprüche eingerichtet ist, wobei das Steuergerät (15) hierzu Datenverbindungen hin zu einem Messmittel (22) der Dosierpumpe (2) zur Erkennung einer Position des beweglichen Pumpenelements (3), zu einem Drucksensor (20) der Förderleitung (4) und/oder zu einem Ventil der Fördereinheit aufweist.

9. Kraftfahrzeug (16), aufweisend eine Verbrennungskraftmaschine (17), eine Abgasbehandlungsvorrichtung (18) zur Reinigung der Abgase der Verbrennungskraftmaschine (17) und eine Fördereinheit (1) nach Patentanspruch 8, mit welcher flüssiges Additiv in die Abgasbehandlungsvorrichtung (18) gefördert werden kann.

## Claims

1. Method for ventilating a delivery unit (1) for a liquid additive, wherein the delivery unit (1) has a metering pump (2), by means of which precise metering of the liquid additive can be performed, with a movable pump element (3) and has a delivery line (4), the method comprising at least the following steps:
a) building up pressure in the delivery line (4) by means of a movement of the movable pump element (3) until a delivery pressure (12) is attained in the delivery line (4);
b) detecting when, during step a), a predefined test pressure (11) is attained in the delivery line (4) ;
c) determining a pump element position (10) when the test pressure (11) is attained;
d) comparing the pump element position (10) with a predefined limit position (32) and detecting air (7) in the delivery line (4) if the pump element position (10) exceeds the predefined limit position (32); and
e) initiating a purging process for at least one part of the delivery line (4) if air has been detected in the delivery line (4) in step d).

2. Method according to Patent Claim 1, wherein steps a) to d) are carried out during a delivery phase (28) of the delivery unit (1) and step e) is first carried out after the end of the delivery phase (28).

3. Method according to one of the preceding patent claims, wherein the method is repeated regularly and step e) is carried out only if air (7) is detected in the delivery line (4) in step d) several times in succession.

4. Method according to one of the preceding patent claims, wherein method steps a) to d) are carried out during every delivery phase (28) of the delivery unit (1).

5. Method according to one of Patent Claims 1 to 4, wherein the delivery unit (1) has an injection device (8) by means of which the liquid additive can be dispensed in a dosed fashion, and during the purging process in step e), air (7) is conveyed out of the delivery line (4) through the injection device (8).

6. Method according to one of Patent Claims 1 to 4, wherein the delivery unit (1) has a return line (9) which branches off from the delivery line (4), and during the purging process in step e), air (7) is conveyed out of the delivery line (4) through the return line (9).

7. Method according to one of the preceding patent claims, wherein the predefined test pressure (11) is considerably lower than the delivery pressure (12) and is less than 0.5 bar above a minimum pressure (30) in the delivery line (4).

8. Delivery unit (1) for a liquid additive, having a metering pump (2), by means of which precise metering of the liquid additive can be performed, with a movable pump element (3), having a delivery line (4), and having a control unit (15) which is designed for carrying out a method according to one of the preceding patent claims, wherein the control unit (15) has, for this purpose, data connections to a measurement means (22) of the metering pump (2) for the detection of a position of the movable pump element (3), to a pressure sensor (20) of the delivery line (4), and/or to a valve of the delivery unit.

9. Motor vehicle (16) having an internal combustion engine (17), having an exhaust-gas treatment device (18) for the purification of the exhaust gases of the internal combustion engine (17), and having a delivery unit (1) according to Patent Claim 8 by means of which liquid additive can be delivered into the exhaust-gas treatment device (18).

## Revendications

1. Procédé de purge d'air d'une unité (1) d'alimentation en un additif liquide, l'unité (1) d'alimentation comprenant une pompe (2) doseuse, par laquelle une addition dosée exacte de l'additif liquide peut s'effectuer et qui a un élément (3) mobile de pompe et un conduit (4) d'alimentation, comprenant au moins les stades suivants :
a) établissement d'une pression dans le conduit (4) d'alimentation par un déplacement de l'élément (3) mobile de la pompe jusqu'à ce qu'une pression (12) d'alimentation soit atteinte dans le conduit (4) d'alimentation ;
b) constatation du moment où, pendant le stade a), une pression (11) de contrôle donnée à l'avance est atteinte ;
c) détermination d'une position (10) de l'élément de pompe quand la pression (11) de contrôle est atteinte ;
d) comparaison de la position (10) de l'élément de pompe à une position (32) limite donnée à l'avance et constatation de la présence d'air (7) dans le conduit d'alimentation, lorsque la position (10) de l'élément de pompe a dépassé la position (32) limite donnée à l'avance et
e) lancement d'une opération de nettoyage d'au moins une partie du conduit (4) d'alimentation, lorsqu'au stade d) il a été constaté la présence d'air dans le conduit (4) d'alimentation.

2. Procédé suivant la revendication 1, dans lequel on effectue les stades a) à d) pendant une phase (28) d'alimentation de l'unité (1) d'alimentation et on effectue le stade e) seulement après la fin de la phase (28) d'alimentation.

3. Procédé suivant l'une des revendications précédentes, dans lequel on effectue le procédé d'une manière répétée régulièrement et on n'effectue le stade e) que lorsqu'au stade d) on a constaté plusieurs fois successivement la présence d'air (7) dans le conduit (4) d'alimentation.

4. Procédé suivant l'une des revendications précédentes, dans lequel on effectue les stades a) à d) du procédé dans chaque phase (28) d'alimentation de l'unité (1) d'alimentation.

5. Procédé suivant l'une des revendications 1 à 4, dans lequel l'unité (1) d'alimentation a un dispositif (8) de pulvérisation par lequel l'additif liquide peut être cédé de manière dosée et dans l'opération de nettoyage au stade e), on refoule de l'air (7) hors du conduit (4) d'alimentation par le dispositif (8) de pulvérisation.

6. Procédé suivant l'une des revendications 1 à 4, dans lequel l'unité (1) d'alimentation a un conduit (9) de retour, qui bifurque du conduit (4) d'alimentation et, dans l'opération de nettoyage au stade e), on refoule de l'air (7) hors du conduit (4) d'alimentation par le conduit (9) de retour.

7. Procédé suivant l'une des revendications précédentes, dans lequel la pression (11) de contrôle donnée à l'avance est nettement plus basse que la pression (12) d'alimentation et de moins de 0,5 bar au-dessus d'une pression (30) minimum dans le conduit (4) d'alimentation.

8. Unité (1) d'alimentation d'un additif liquide, comprenant une pompe (2) doseuse, par laquelle une addition dosée de manière précise de l'additif liquide peut s'effectuer et qui a un élément (3) mobile de pompage, un conduit (4) d'alimentation et un appareil (15) de commande qui est conçu pour effectuer un procédé suivant l'une des revendications précédentes, l'appareil (15) de commande ayant à cet effet des communications de données vers un moyen (22) de mesure de la pompe (2) doseuse pour reconnaître une position de l'élément (3) mobile de la pompe, vers une sonde (20) de pression du conduit (4) d'alimentation et/ou vers un robinet de l'unité d'alimentation.

9. Véhicule (16) automobile ayant un moteur (17), à combustion interne, un dispositif (18) de traitement des gaz d'échappement pour épurer les gaz d'échappement du moteur (17) à combustion et une unité (1) d'alimentation suivant la revendication 8, par laquelle de l'additif liquide peut être envoyé dans le dispositif (18) de traitement des gaz d'échappement.
